(19) Europäisches Patentamt
European Patent Office
Office européen des brevets

(11) Veröffentlichungsnummer: **0 028 342**
**B1**

(12) **EUROPÄISCHE PATENTSCHRIFT**

(45) Veröffentlichungstag der Patentschrift: **12.10.83**

(51) Int. Cl.³: **C 09 B 67/46,** C 09 B 67/38, D 06 P 1/613

(21) Anmeldenummer: **80106351.2**

(22) Anmeldetag: **18.10.80**

# (54) Verwendung von veresterten Oxalkylaten als Präparationsmittel für Farbstoffe und entsprechende Farbstoffzubereitungen.

(30) Priorität: **31.10.79 DE 2943902**

(43) Veröffentlichungstag der Anmeldung: **13.05.81 Patentblatt 81/19**

(45) Bekanntmachung des Hinweises auf die Patenterteilung: **12.10.83 Patentblatt 83/41**

(84) Benannte Vertragsstaaten: **BE CH DE FR GB IT LI NL**

(56) Entgegenhaltungen:

**EP-A-137**
**DE-A-1 595 369**
**DE-A-2 520 527**
**DE-B-2 512 520**
**DE-C-605 973**
**FR-A-2 066 999**
**FR-A-2 115 214**

(73) Patentinhaber: **HOECHST AKTIENGESELLSCHAFT, Postfach 80 03 20, D-6230 Frankfurt am Main 80 (DE)**

(72) Erfinder: **Schneider, Manfred, Cuntzstrasse 1, D-6239 Eppstein/Taunus (DE)**
Erfinder: **Kruse, Hubert, Luisenstrasse 33, D-6233 Kelkheim (Taunus) (DE)**
Erfinder: **Opitz, Konrad, Dr., Schwedenstrasse 22, D-6237 Liederbach (DE)**
Erfinder: **Billenstein, Siegfried, Dr., Samerbergweg 8, D-8261 Burgkirchen/Alz (DE)**

**EP 0 028 342 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verwendung von veresterten Oxalkylaten als Präparationsmittel für Farbstoffe und entsprechende Farbstoffzubereitungen

Die Erfindung betrifft die Verwendung von wasserlöslichen Verbindungen der Formel I

$$A\left[-O-(X-O)_n-\right]_p \begin{matrix} H_m \\ (CO\text{-}R)_{p-m} \end{matrix} \qquad I$$

in der

A ein aliphatischer oder cycloaliphatischer Rest mit 2 bis 10 C-Atomen ist,

X für gleiche oder verschiedene Gruppen der Formel

$-CH_2-CH_2-$ und $-CH_2-CH(CH_3)-$

steht,

R für gleiche oder verschiedene organische Reste einer Carbonsäure R-COOH mit bis zu 22 C-Atomen steht,

n gleiche oder verschiedene Zahlen von 8 bis 150 bedeutet,

m eine Zahl von 0 bis 4 ist und

p eine ganze Zahl von 2 bis 6 bedeutet, wobei p-m mindestens 2 ist,

als Präparationsmittel für Farbstoffe.

Bevorzugt ist die Verwendung von Verbindungen der Formel I — im folgenden «Veresterungsprodukte» genannt — in denen A ein Alkylenrest mit 2 bis 6 C-Atomen, R der Rest einer Alkan- oder Alkencarbonsäure, der Anteil der Oxethylgruppen im Rest X, bezogen auf das Gewicht des Gesamtmoleküls, 40 bis 95%, insbesondere 60 bis 90%, vor allem 65 bis 85% ist und das Molgewicht 3000 bis 40 000, insbesondere 6000 bis 30 000, vor allem 7000 bis 14 000 ist.

Die erfindungsgemäss zu verwendenden Veresterungsprodukte lassen sich, gegebenenfalls nach Zugabe eines Katalysators, durch Veresterung der Alkylenoxidaddukte mit der oder den entsprechenden Fettsäuren herstellen.

Diese Veresterungsprodukte eignen sich hervorragend als Präparationsmittel für in Wasser unlösliche bis schwerlösliche Farbstoffe, insbesondere Küpen- und Dispersionsfarbstoffe, und erlauben die Herstellung hochkonzentrierter, dispergiermittelarmer Flüssig- und Pulvereinstellungen, wobei diese Einstellungen eine Vielzahl vorteilhafter Eigenschaften aufweisen.

Gegenstand der Erfindung sind deshalb auch Zubereitungen, die durch einen Gehalt an einem feinverteilten Farbstoff, dessen Teilchengrösse unter 5 $\mu m$, vorteilhaft unter 3 $\mu m$ ist, und einem Veresterungsprodukt gekennzeichnet sind.

Die bisher bekannten Zubereitungen von Dispersionsfarbstoffen weisen noch eine Reihe von Nachteilen auf, die die erfindungsgemässen Farbstoffzubereitungen nicht zeigen. So verursachen herkömmliche Zubereitungen von Dispersionsfarbstoffen, die ausschliesslich anionische Dispergiermittel enthalten, beim Anrühren von Druckpasten mit synthetischen Verdickungsmitteln einen unerwünschten Abfall der Viskosität. Normalerweise steigt mit zunehmendem Gehalt an Dispergiermittel im Mahl- oder Knetteig auch die Viskosität der Zubereitung stark an, so dass in ungünstigen Fällen, vor allem bei etwas höheren Temperaturen, die Einstellungen dickflüssig oder sogar fest werden. Andererseits kann der Anteil des anionischen Dispergiermittels nicht beliebig verringert werden, da sonst oft instabile oder von vornherein ungenügend fein verteilte Dispersionen erhalten werden.

In den Färbereien werden aus Rationalisierungsgründen immer kürzere Flottenverhältnisse der Färbebäder angestrebt. Dafür werden möglichst hochkonzentrierte Farbstoffeinstellungen bevorzugt. Die hohen Anteile anionischer Dispergiermittel in herkömmlichen Dispersionsfarbstoffpräparationen können bei modernen Färbeverfahren, wie in der Jet-Färberei, zu unerwünschter Schaumbildung führen. Oft wird auch ein starkes Farbstoffrückhaltevermögen, vor allem bei Klotzfärbungen, beanstandet. In Druckereien bedingt der hohe Dispergiermittelanteil in üblichen Dispersionsfarbstoffpräparationen ausser dem schon genannten ungünstigen Einfluss auf die Viskosität der Druckpasten auch ein aufwendiges Nachwaschen der Drucke.

Die Erfindung erlaubt es nun, Farbmittelzubereitungen herzustellen, die den genannten Einschränkungen nicht unterworfen sind und sich besonders für eine Reihe von Spezialaufgaben eignen. So können erfindungsgemässe wässrige Farbmitteldispersionen ohne Qualitätseinbusse zu Pulvern getrocknet werden. Sowohl die Pulver als auch die Flüssigeinstellungen eignen sich hervorragend zum Färben und Bedrucken der verschiedensten Materialien.

Im folgenden werden weitere bevorzugte Ausgestaltungen der Erfindung näher erläutert, wobei sich Prozentangaben auf das Gewicht beziehen, wenn nichts anderes angegeben ist.

Bevorzugt werden Ester von aliphatischen, cycloaliphatischen oder aromatischen Carbonsäuren von bis zu 22 C-Atomen mit Ethylen- und/oder Propylenoxidaddukten eingesetzt, wobei der Anteil des Ethylenoxids und/oder Propylenoxids so bemessen wird, dass eine gute Wasserlöslichkeit des Endproduktes erreicht wird. Ein Mass für die Wasserlöslichkeit stellt hierbei der Trübungspunkt dar. Bevorzugt werden Veresterungsprodukte, deren 4%ige Lösung in 4%iger Kochsalzlösung einen Trübungspunkt von mindestens 80°C, insbesondere mindestens 85°C aufweisen.

Neben Ethylen- und Propylenglykol können beispielsweise auch Glycerin, Butandiol-(1,4), Neopentylglykol, Pentandiol-(1,5), Hexandiol-(1,6), Hexandiol-(2,5), 1,1,1-Trimethylolpropan oder andere Hexantriole, Cyclohexandiol-(1,4), Pentaerythrit, Sorbit oder Hexit mit Ethylen- und/oder Propylenoxid verethert und anschliessend verestert werden.

Bevorzugte Zubereitungen enthalten 5 bis 90, insbesondere 10 bis 80% Farbstoff, 2 bis 30, insbesondere 2 bis 15% Veresterungsprodukt, bis zu 20, insbesondere bis zu 10% anionische Dispergiermittel und bis zu 70% Wasser und/oder Wasserrückhaltemittel. Darüber hinaus können die erfindungsgemässen Zubereitungen in solchen Präparationen übliche Hilfsmittel enthalten, beispielsweise hygroskopische Mittel, Schaumdämpfer, Entstaubungsmittel oder Konservierungsmittel. Enthalten diese Präparationen weitere in solchen Einstellungen übliche Hilfsmittel, so können diese vor, während oder nach der Dispergierung der Farbstoffe zugesetzt werden.

Sofern die erfindungsgemässen Präparationen anionische Dispergiermittel enthalten, werden die hierfür üblicherweise verwendeten Dispergiermittel eingesetzt. Bevorzugt sind Kondensationsprodukte aus aromatischen Sulfonsäuren und Formaldehyd, insbesondere Kondensationsprodukte aus Alkylnaphthalinsulfonsäuren, vor allem Methylnaphthalinsulfonsäuren und Formaldehyd, wie sie aus der DE-PS 2 442 514 bekannt sind. Geeignet sind auch Kondensationsprodukte aus gegebenenfalls substituiertem Phenol mit Formaldehyd und Natriumbisulfat sowie Alkalisalze von Ligninsulfonsäuren.

Im Vergleich zu üblichen Farbstoffzubereitungen zeichnen sich die erfindungsgemässen Präparationen durch einen sehr geringen Gehalt an oberflächenaktiven Substanzen aus. Die erfindungsgemäss zu verwendenden wasserlöslichen Veresterungsprodukte zeichnen sich darüber hinaus durch eine gute biologische Abbaubarkeit aus, so dass es nur zu einer minimalen Abwasserbelastung kommt.

Trotz des geringen Einsatzes an oberflächenaktiven Substanzen, insbesondere an anionischen Dispergiermitteln, erhält man erfindungsgemässe Präparationen, die bei sehr hohem Farbstoffgehalt als Flüssigeinstellung gut fliessfähig und lagerstabil sind.

Wegen der guten Verträglichkeit mit synthetischen Verdickungsmitteln können die Präparationen in Drucktinten für den Rouleauxdruck mit sehr «seichten» Gravuren eingesetzt werden, wobei farbstarke Drucke erhalten werden. Ebenso ist der Einsatz im Rotationsfilmdruck möglich.

Die Herstellung der erfindungsgemässen Präparationen kann nach allen bekannten Verfahren erfolgen. Zur Herstellung von Präparationen wasserunlöslicher Farbstoffe wird der Farbstoff oder eine Mischung von Farbstoffen mit einem oder mehreren der genannten Veresterungsprodukte, gegebenenfalls einem anionischen Dispergiermittel sowie gegebenenfalls anderen Zusätzen vermischt und einer mechanischen Zerkleinerung unterworfen. Hierbei kann die Reihenfolge der Zugabe der Komponenten auch verändert werden. Die mechanische Zerkleinerung erfolgt bevorzugt in Knetern, Kugelmühlen, Dispergatoren, Perlmühlen, Sandmühlen oder Attritoren. Das Erreichen der gewünschten Feinverteilung von kleiner als 5 $\mu$m, vorzugsweise < 3 $\mu$m Teilchengrösse kann durch einen Filtertest oder mit dem Mikroskop festgestellt werden. Die so erhaltenen Präparationen enthalten die Farbstoffe in stabiler, feinverteilter Form.

Die Feinverteilung bleibt auch bei mehrwöchiger Lagerung sowohl bei Raumtemperatur als auch bei 50°C erhalten und wird auch durch Kälteeinwirkung nicht beeinträchtigt.

Zur Herstellung einer pulverförmigen Präparation können wässrige Präparationen in üblicher Weise, beispielsweise mittels Zerstäubungstrocknung, getrocknet werden. Die so erhaltenen pulverförmigen Präparationen werden durch einfaches Einrühren in Wasser oder in Bindemittellösungen gut redispergiert.

Durch den geringen Gehalt an oberflächenaktiven Substanzen, insbesondere an anionischen Dispergiermitteln, tritt beim Einsatz der erfindungsgemässen Farbstoffpräparationen in Färbebädern oder Druckpasten keine retardierende Wirkung auf und es werden brillante Farbtöne erhalten. Ausserdem kann im Falle des Direktdrucks die erforderliche Nachwäsche wesentlich verkürzt werden oder bei Verwendung körperarmer Verdickungen sogar ganz entfallen, ohne dass es zu einer merklichen Griffverschlechterung der bedruckten Ware käme oder Brillanz und Farbton beeinträchtigt würden. In diesem Falle werden die Präparationen vorteilhaft auf einen pH-Wert von etwa 6 bis 8 eingestellt.

In einer besonders bevorzugten Ausgestaltung der Erfindung werden Farbstoffe eingesetzt, die bei atmosphärischem Druck zwischen 150 und 220°C zu mindestens 60% unzersetzt sublimieren, insbesondere Dispersionsfarbstoffe aus der Reihe der Mono- oder Disazo-, Anthrachinon-, Chinophthalon-, Nitro-, Azomethin-, Naphthalintetracarbonsäure- oder Benzoxanthenfarbstoffe oder Mischungen solcher Farbstoffe. Die so erhaltenen Präparationen eignen sich zur Herstellung von Druckfarben für das Bedrucken von Transferpapieren für den Thermodruck.

In den folgenden Beispielen beziehen sich Prozentangaben und Teile auf das Gewicht, sofern nichts anderes angegeben ist.

*Beispiel 1*

400 Teile des trockenen Farbstoffes der Formel (1)

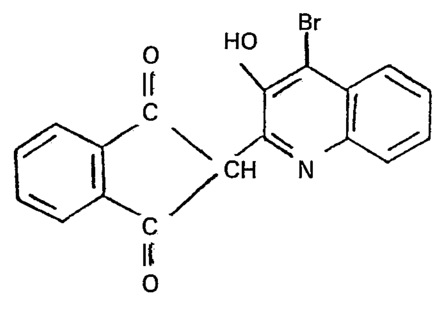

(1)

werden in einer Lösung aus 40 Teilen des Diessigsäureesters eines Propylen-Ethylenoxid-Blockpolymerisats mit einem mittleren Molgewicht von 8500 und einem Ethylenoxidanteil von 80% (im folgenden «nichtionogenes Dispergiermittel I») und 20 Teilen des aus Beispiel D der DE-PS 2 442 514 bekannten Dispergiermittels (im folgenden «anionisches Dispergiermittel A»), 150 Teilen Ethylenglykol, 2 Teilen Chloracetamid als Konservierungsmittel und 300 Teilen Wasser in einer Perlmühle mit Siliquarzitperlen gemahlen. Nach 4 Stunden erhält man eine Dispersion, deren Teilchen zu über 90% kleiner als 3 $\mu$m sind. Nach Zugabe von 90 Teilen Wasser und Abtrennen der Perlen erhält man 1000 Teile eines gut fliessfähigen Teiges mit einem Farbstoffgehalt von 40%. Die Dispersion ist bei Raumtemperatur und bei 50°C mehrere Monate lagerstabil.

*Beispiel 2*

400 Teile des trockenen Farbstoffes der Formel (2)

(2) 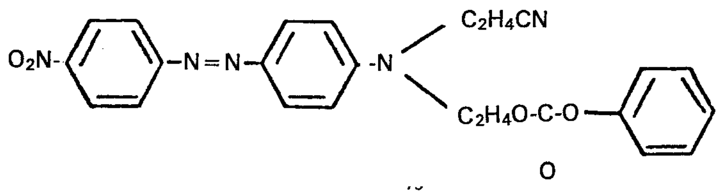

werden in einer Lösung aus 80 Teilen des Diessigsäureesters eines Ethylen-Propylenoxid-Blockpolymerisats mit einem mittleren Molgewicht von 7500 und einem Ethylenoxidanteil von 68% (im folgenden «nichtionogenes Dispergiermittel II»), 15 Teilen eines Ligninsulfonats (im folgenden «anionisches Dispergiermittel B»), 200 Teilen Ethylenglykol, 2 Teilen Pentachlorphenol-Na als Konservierungsmittel und 200 Teilen Wasser in einer Perlmühle mit Siliquarzitperlen 7 Stunden gemahlen. Nach dieser Zeit erhält man eine gut fliessfähige Dispersion, deren Teilchen zu über 90% kleiner als 3 $\mu$m sind. Die Teigeinstellung wird mit Wasser auf 1000 Teile aufgefüllt und von den Perlen abfiltriert. Die 40% Farbstoff enthaltende Präparation ist über mehrere Monate bei Raumtemperatur und bei 50°C lagerstabil.

Verwendet man anstelle der in Beispiel 2 genannten Komponenten die in den folgenden Tabellen angegebenen Farbstoffe und Dispergiermittel und verfährt im übrigen analog Beispiel 2, so resultieren ebenfalls freifliessende, lagerstabile Teigeinstellungen.

a) Die Farbstoffe

(3) 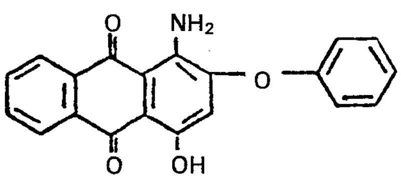

(4) 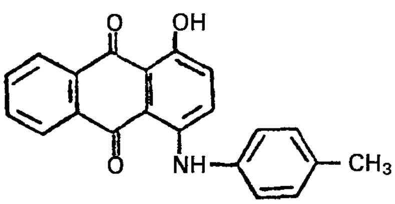

(5) 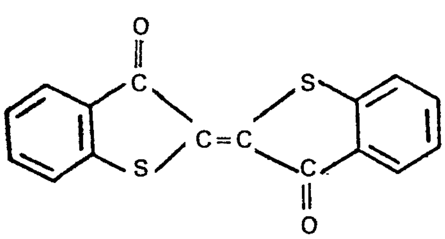

(6) 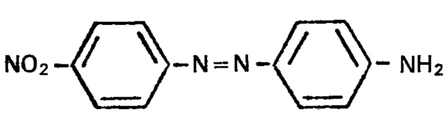

(7) 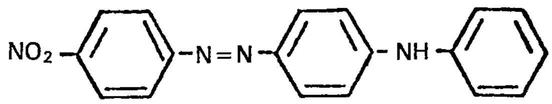

(8) 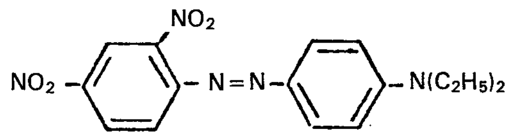

(9) 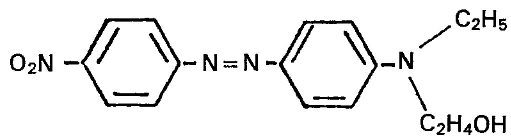

(10) 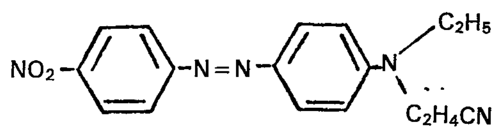

(11) 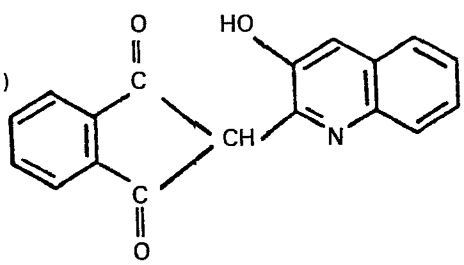

(12) 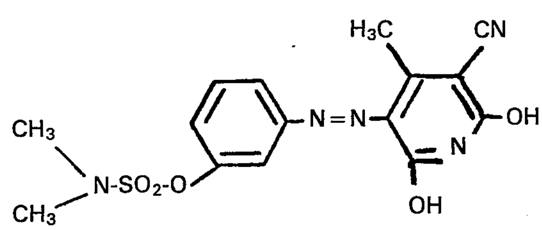

(13) 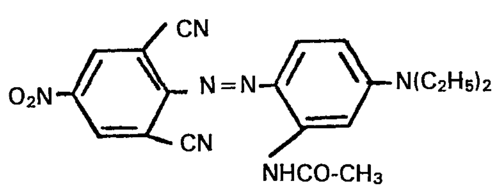

(14) 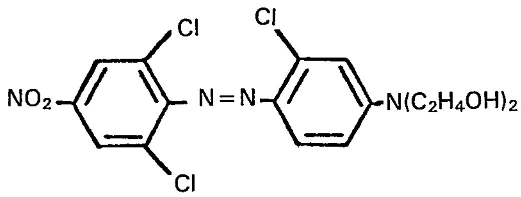

(15) 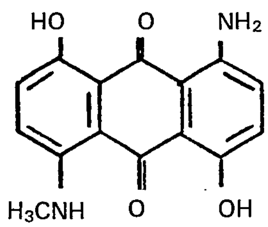

(16) 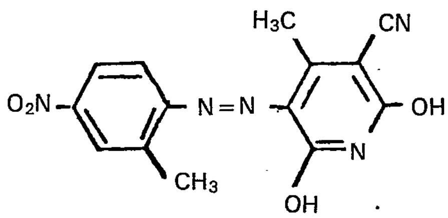

(17) 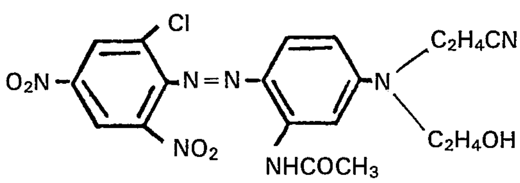

b) nichtionogene Dispergiermittel:

III. Essigsäurediester eines mit Ethylenoxid umgesetzten Pentaerythritoxpropylats; Endprodukt: 80% Ethylenoxidgehalt, Molgewicht ca. 25 000

IV. Ameisensäurediester eines Ethylen-Propylenoxid-Blockpolymerisats (Molgewicht ca. 9000) mit 80% Ethylenoxidgehalt

V. Ölsäurediester eines Ethylen-Propylenoxid-Blockpolymerisats (Molgewicht ca. 8000) mit 80% Ethylenoxidgehalt

VI. Stearinsäurediester eines mit Ethylenoxid umgesetzten Pentaerythritoxpropylats; Endprodukt: 80% Ethylenoxidgehalt, Molgewicht ca. 25 000

VII. Essigsäurediester eines Ethylen-Propylenoxid-Blockpolymerisats (Molgewicht ca. 13500) mit 80% Ethylenoxidgehalt

c) anionische Dispergiermittel

Dispergiermittel C

ist ein Sulfobernsteinsäurehalbester eines oxethylierten Kondensationsproduktes aus Nonylphenol und Formaldehyd (DE-PS 2 132 403, Beispiel B),

Dispergiermittel D

ist ein Kondensationsprodukt aus Kresol, dem Natriumsalz der 2-Hydroxynaphthylin-6-sulfonsäure («Schäffersalz»), Formaldehyd und Natriumhydrogensulfit.

| Beispiel | Farbstoff | | nichtionogenes Dispergiermittel | | anionisches Dispergiermittel | | Mahldauer | Ethylenglykol |
|---|---|---|---|---|---|---|---|---|
| | Teile | Nr. | Teile | Nr. | Teile | Nr. | (Stdn.) | Teile |
| 3 | 450 | 3 | 80 | IV | 5 | B | 4 | 150 |
| 4 | 300 | 6 | 80 | I | 20 | A | 5 | 200 |
| 5 | 350 | 8 | 100 | I | 20 | A | 4 | 200 |
| 6 | 300 | 7 | 80 | I | 20 | A | 5 | 250 |
| 7 | 400 | 11 | 80 | III | 15 | D | 5 | 100 |
| 8 | 350 | 13 | 100 | III | 20 | C | 7 | 200 |
| 9 | 400 | 5 | 60 | IV | 20 | C | 5 | 200 |
| 10 | 350 | 15 | 80 | I | 40 | D | 2 | 200 |
| 11 | 300 | 9 | 80 | II | 20 | B | 5 | 250 |
| 12 | 350 | 10 | 100 | II | 20 | B | 4 | 200 |
| 13 | 450 | 11 | 80 | IV | 30 | D | 5 | 100 |
| 14 | 400 | 4 | 80 | I | 20 | A | 5 | 100 |
| 15 | 350 | 4 | 100 | III | 15 | D | 6 | 120 |
| 16 | 450 | 12 | 100 | I | — | — | 5 | 100 |
| 17 | 400 | 12 | 80 | III | — | — | 6 | 100 |
| 18 | 400 | 1 | 100 | I | — | — | 5 | 200 |
| 19 | 400 | 11 | 100 | I | — | — | 5 | 200 |
| 20 | 300 | 14 | 100 | VII | 20 | A | 7 | 200 |
| 21 | 300 | 16 | 80 | I | 20 | A | 4 | 100 |
| 22 | 250 | 17 | 100 | I | 25 | B | 6 | 150 |
| 23 | 350 | 11 | 80 | V | 20 | A | 5 | 100 |
| 24 | 400 | 12 | 70 | VI | 10 | B | 6 | 100 |
| 25 | 350 | 5 | 100 | V | 20 | B | 5 | 200 |
| 26 | 300 | 3 | 80 | VI | 15 | C | 5 | 200 |

*Beispiel 27*

593 Teile eines feuchten Presskuchens des Farbstoffes der Formel (13) mit einem Feststoffgehalt von 27% werden mit 200 Teilen einer wässrigen Lösung, enthaltend 30 Teile des nichtionogenen Dispergiermittels I, perlgemahlen. Nach 4 Stunden Mahldauer werden weitere 167 Teile der wässrigen Lösung, enthaltend 25 Teile nichtionogenes Dispergiermittel I, zugesetzt und nochmals 30 Minuten perlgemahlen. Der Mahlteig wird von den Perlen abgetrennt und über einen Zerstäubungstrockner bei 160 bis 180°C Eingangs- und 70 bis 80°C Ausgangstemperatur sprühgetrocknet. Man erhält ein rieselfähiges Pulver mit einem Farbstoffgehalt von 75%, das sich gut durch Einrühren in einer Druckverdickung, einem wässrigen Färbebad oder einer Klotzflotte verteilen lässt.

*Beispiel 28*

355 Teile eines feuchten Presskuchens des Farbstoffes der Formel (12) mit einem Feststoffgehalt von 45% werden mit 125 Teilen einer wässrigen Lösung, enthaltend 25 Teile des nichtionogenen Dispergiermittels III und 15 Teilen Dispergiermittel D, perlgemahlen. Nach 5 Stunden Mahlzeit wird die Dispersion von den Perlen abgetrennt und wie in Beispiel 27 sprühgetrocknet. Es resultiert ein Pulver mit einem Farbstoffgehalt von 80% mit den in Beispiel 27 genannten vorteilhaften Eigenschaften.

**Patentansprüche**

1. Verwendung wasserlöslicher Verbindungen der Formel I

$$A\left[-O-(X-O)_n-\right]_p \begin{matrix} H_m \\ (CO\text{-}R)_{p\text{-}m} \end{matrix} \qquad I$$

in der

A ein aliphatischer oder cycloaliphatischer Rest mit 2 bis 10 C-Atomen ist,

X für gleiche oder verschiedene Gruppen der Formel

$-CH_2\text{-}CH_2-$ und $-CH_2\text{-}CH(CH_3)-$

steht,

R für gleiche oder verschiedene organische Reste einer Carbonsäure R-COOH mit bis zu 22 C-Atomen steht,

n gleiche oder verschiedene Zahlen von 8 bis 150 bedeutet,

m eine Zahl von 0 bis 4 ist und

p eine ganze Zahl von 2 bis 6 bedeutet, wobei p-m mindestens 2 ist,

als Präparationsmittel für Farbstoffe.

2. Verwendung von Verbindungen der Formel I nach Anspruch 1, wobei

A ein Alkylenrest mit 2 bis 6 C-Atomen,

R der Rest einer Alkan- oder Alkencarbonsäure, der Anteil der Oxethylgruppen im Rest X, bezogen auf das Gewicht des Gesamtmoleküls, 40 bis 95% und das Molgewicht 3000 bis 40 000 ist.

3. Verwendung von Verbindungen der Formel I nach Anspruch 1 und 2, wobei der Anteil der Oxethylgruppe im Rest X, bezogen auf das Gewicht des Gesamtmoleküls, 60 bis 90% und das Molgewicht 6000 bis 30 000 ist.

4. Verwendung von Verbindungen der Formel I nach Anspruch 1 bis 3, wobei der Anteil der Oxethylgruppen im Rest X, bezogen auf das Gewicht des Gesamtmoleküls, 65 bis 85% und das Molgewicht 7000 bis 14 000 ist.

5. Farbstoffzubereitungen, gekennzeichnet durch einen Gehalt an einem Farbstoff mit einer Teilchengrösse unter 5 $\mu$m an einer Verbindung der Formel I nach Anspruch 1, gegebenenfalls an einem anionischen Dispergiermittel, sowie gegebenenfalls an Wasser und/oder Hilfsmittel.

6. Zubereitungen nach Anspruch 5, gekennzeichnet durch einen Gehalt an einem Farbstoff mit einer Teilchengrösse unter 3 $\mu$m.

7. Zubereitungen nach Anspruch 5 und 6, gekennzeichnet durch einen Gehalt an einem Dispersions- oder Küpenfarbstoff.

8. Zubereitungen nach Anspruch 5 bis 7, gekennzeichnet durch einen Gehalt an einem Farbstoff, der bei atmosphärischem Druck zwischen 150 und 220°C zu mindestens 60% unzersetzt sublimierbar ist.

9. Zubereitungen nach Anspruch 5 bis 8, gekennzeichnet durch einen Gehalt an

5-90 Gew.-% Farbstoff,
2-30 Gew.-% Verbindung der Formel I,
0-20 Gew.-% anionische Dispergiermittel und
0-70 Gew.-% Wasser und/oder Hilfsmittel.

10. Zubereitungen nach Anspruch 5 bis 9, gekennzeichnet durch einen Gehalt an

10-80 Gew.-% Farbstoff,
2-15 Gew.-% Verbindung der Formel I,
0-10 Gew.-% anionische Dispergiermittel und
0-70 Gew.-% Wasser und/oder Hilfsmittel.

**Claims**

1. Use of water-soluble compounds of the formula I

$$A\left[-O-(X-O)_n-\right]_p \begin{matrix} H_m \\ (CO\text{-}R)_{p\text{-}m} \end{matrix} \qquad I$$

wherein

A is an aliphatic of cycloaliphatic radical of 2 to 10 carbon atoms,

X stands for the same or different groups of the formulae

$CH_2\text{-}CH_2-$ and $-CH_2\text{-}CH(CH_3)-$,

R represents identical or different organic radicals of a carboxylic acid R-COOH having up to 22 carbon atoms,

n stands for the same or different numbers of 8 to 150,

m is an integer of zero to 4,

p is an integer of 2 to 6, with the proviso that p-m is at least 2,

as preparation agents for dyestuffs.

2. Use of compounds of the formula I according to claim 1, wherein

A is an alkylene radical of 2 to 6 carbon atoms,

R is the radical of an alkonoic or alkenoic acid, the proportion of oxethyl groups in the group X is 40 to 95% by weight, referred to the weight of the total molecule, and the molecular weight is 3,000 to 40,000.

3. Use of compounds of the formula I according to claims 1 and 2, wherein the proportion of oxethyl groups in the radical X is 60 to 90%, relative to the weight of the total molecule, and the molecular weight is 6,000 to 30,000.

4. Use of compounds of the formula I according to claims 1 to 3, wherein the proportion of oxethyl groups in the radical X is 65 to 85%, relative to the weight of the total molecule, and the molecular weight is 7,000 to 14,000.

5. Dyestuff formulations characterized by a content of a dyestuff having a particle size below 5 $\mu m$, a compound of the formula I as caimed in claim 1, optionally an anionic dispersant, and optionally water and/or auxiliaries.

6. Compositions as claimed in claim 5, which comprise a dyestuff having a particle size of less than 3 $\mu m$.

7. Compositions as claimed in claims 5 and 6, wherein the dyestuff is a disperse or vat dyestuff.

8. Compositions as claimed in claims 5 to 7, wherein the dyestuff is capable of subliming at atmospheric pressure and a temperature of 150 to 220°C, the sublimed dyestuff being at least 60% undecomposed.

9. Compositions as claimed in claims 5 to 8, consisting of 5 to 90% by weight of dyestuff, 2 to 30% by weight of compound of the formula I, from 0 to 20% by weight of anionic dispersants and from 0 to 70% by weight of water and/or adjuvants.

10. Compositions as claimed in claims 5 to 9, consisting of 10 to 80% by weight of dyestuff, 2 to 15% by weight of compound of the formula I, from 0 to 10% by weight of anionic dispersants and from 0 to 70% by weight of water and/or adjuvants.

**Revendications**

1. Application de composés hydrosolubles répondant à la formule I:

$$A\left[-O-(X-O)_n-\right]_p \begin{matrix} H_m \\ (CO\text{-}R)_{p-m} \end{matrix} \qquad I$$

dans laquelle

A représente un radical aliphatique ou cycloaliphatique contenant de 2 à 10 atomes de carbone,

les X représentent des radicaux, identiques ou différents, répondant à l'une ou à l'autre des formules

$-CH_2-CH_2-$ et $-CH_2-CH(CH_3)-$,

les R représentent des radicaux organiques, identiques ou différents, provenant d'un acide carboxylique R-COOH contenant au plus 22 atomes de carbone,

les n représentent des nombres, égaux ou différents, pouvant aller de 8 à 150,

m représente un nombre de 0 à 4 et

p représente un nombre entier de 2 à 6, avec la condition supplémentaire que

p-m soit au moins égal à 2,

comme adjuvants pour la préparation de compositions à base de colorants.

2. Application de composés de formule I selon la revendication 1 dans lesquels

A représente un radical alkylène contenant de 2 à 6 atomes de carbone,

R représente le radical d'un acide alcanoïque ou d'un acide alcénoïque, la proportion pondérale des radicaux oxy-éthylènes dans le radical X, par rapport au poids de la molécule totale, est de 40 à 95%, et le poids moléculaire est de 3000 à 40 000.

3. Application de composés de formule I selon l'une des revendications 1 et 2, selon laquelle la proportion des radicaux oxy-éthylènes dans le radical X, par rapport au poids de la molécule totale, est de 60 à 90%, et le poids moléculaire est de 6000 à 30 000.

4. Application de composés de formule I selon l'une quelconque des revendications 1 à 3, selon laquelle la proportion des radicaux oxy-éthylènes dans le radical X, par rapport au poids de la molécule totale, est de 65 à 85%, et le poids moléculaire est de 7000 à 14 000.

5. Compositions colorantes caractérisées en ce qu'elles contiennent un colorant dont la granularité est inférieure à 5 $\mu m$, un composé de formule I selon la revendication 1, éventuellement un dispersant anionique et éventuellement de l'eau et/ou un adjuvant.

6. Compositions selon la revendication 5, caractérisées en ce qu'elles contiennent un colorant dont la granularité est inférieure à 3 $\mu m$.

7. Compositions selon l'une des revendications 5 et 6, caractérisées en ce qu'elles contiennent un colorant de dispersion ou un colorant de cuve.

8. Compositions selon l'une quelconque des revendications 5 à 7, caractérisées en ce qu'elles contiennent un colorant qui peut se sublimer sous la pression atmosphérique, à une température comprise entre 150 et 220°C, en une proportion d'au moins 60%, sans se décomposer.

9. Compositions selon l'une quelconque des revendications 5 à 8, caractérisées en ce qu'elles contiennent:

de 5 à 90% en poids d'un colorant,

de 2 à 30% en poids d'un composé de formule I,

de 0 à 20% en poids de dispersants anioniques et

de 0 à 70% en poids d'eau et/ou d'un adjuvant.

10. Compositions selon l'une quelconque des revendications 5 à 9, caractérisées en ce qu'elles contiennent:

de 10 à 80% en poids d'un colorant,

de 2 à 15% en poids d'un composé de formule I,

de 0 à 10% en poids de dispersants anioniques et

de 0 à 70% en poids d'eau et/ou d'un adjuvant.